# EUROPEAN PATENT APPLICATION

(11) **EP 4 760 793 A1**
(43) Date of publication of application: **17.06.2026**
(21) Application number: 24851756.7
(22) Date of filing: 02.08.2024
(51) Int. Cl.: H01M 4/13, H01G 11/36, H01G 11/38, H01M 4/136, H01M 4/36, H01M 4/58, H01M 4/62, H01M 10/04, H01M 10/0585, H01M 50/474

(54) **POSITIVE ELECTRODE FOR POWER STORAGE DEVICE, AND POWER STORAGE DEVICE**

(30) Priority: 07.08.2023 JP 2023128555
(71) Applicant: KABUSHIKI KAISHA TOYOTA JIDOSHOKKI, Kariya-shi, Aichi 448-8671 (JP)
(72) Inventor: SUGIMOTO, Yuki, Kariya-shi, Aichi 448-8671 (JP); MASUDA, Masaki, Kariya-shi, Aichi 448-8671 (JP); HASHIZUME, Taro, Kariya-shi, Aichi 448-8671 (JP); IWATA, Hiroshi, Kariya-shi, Aichi 448-8671 (JP)
(74) Representative: TBK
(86) International application number: PCT/JP2024/027635
(87) International publication number: WO 2025/033331

(57) **Abstract**

A positive electrode (21) for a power storage device comprises: a positive electrode current collector (21a) that has a first surface (21a1); and a positive electrode active material layer (21b) that is formed on the first surface (21a1) of the positive electrode current collector (21a). The positive electrode active material layer (21b) contains a positive electrode active material that can store and release charge carriers. The basis weight of the positive electrode active material layer (21b) is greater than 50 mg/cm², and the positive electrode active material content in the positive electrode active material layer (21b) is 97 mass% or more. The positive electrode active material layer (21b) contains an aqueous binder with a glass transition temperature of less than 7°C, and single-walled carbon nanotubes.

## Description

### TECHNICAL FIELD

The present invention relates to a positive electrode for a power storage device, and a power storage device.

### BACKGROUND ART

Patent Literature 1 discloses a flat-type power storage device including a plurality of storage cells stacked in series. The power storage cells each include a positive electrode, a negative electrode, and a separator disposed between the positive electrode and the negative electrode. The positive electrode has a positive electrode active material layer on one side of a positive current collector having a foil-like shape. The negative electrode has a negative electrode active material layer on one side of a negative current collector having a foil-like shape, and the negative electrode active material layer faces the positive electrode active material layer of the positive electrode. The power storage device disclosed in Patent Literature 1 is formed by stacking the power storage cells such that the positive current collector is in contact with the negative current collector.

Patent Literature 2 discloses a method for continuously manufacturing electrodes using rolls. The method for manufacturing electrodes disclosed in Patent Literature 2 includes a coating step and a drying step. The coating step is a step for applying an electrode material composition containing an active material, a solvent, and the like onto a current collector sent from a feed roll. The drying step is a step for drying the electrode material composition coating layer on the current collector after the coating step. After the drying step, the current collector is wound onto a winding roll.

### CITATION LIST

Patent Literature
Patent Literature 1: Japanese Patent Application Publication No. 2017-16825
Patent Literature 2: Japanese Patent Application Publication No. H11-102696

### SUMMARY OF INVENTION

### Technical Problem

As one of methods for enhancing an energy density of the power storage cells, an active material loading and an amount of the active material in the active material layer may be increased. However, if both are increased in the positive electrode having the active material layer on the current collector, the active material layer tends to separate from the current collector during the manufacturing of the power storage device including the positive electrode.

As a result of the keen research of inventors of the present invention, it was found that the cause of the separation of the active material layer is the bending load applied to the active material layer during or after the manufacturing of the positive electrode. That is, the flexibility of the active material layer decreases with increasing the active material loading and with increasing the amount of the active material. Accordingly, when bending load is applied to the active material layer, the active material layer cannot withstand the applied bending load, which causes cracking. Due to this cracking in the active material layer, the active material layer may separate from the current collector during the manufacturing of the power storage device.

There are situations in which bending load is applied to the active material layer during or after the manufacturing stage of the positive electrode, for example, when the current collector passes through a guide roll for changing the transport direction and when the current collector is bent along the outer periphery of the roll such as when the current collector is wound on a winding roll.

### Solution to Problem

A positive electrode for a power storage device to solve the problem includes: a current collector having a first surface; and a positive electrode active material layer formed on the first surface of the current collector, the positive electrode active material layer containing a positive electrode active material that is capable of storing and releasing charge carriers, the positive electrode active material layer having an active material loading of more than 50 mg/cm² and containing the positive electrode active material in an amount of 97% by mass or more, wherein the positive electrode active material layer contains: an aqueous binder with a glass transition temperature of less than 7°C; and a single-walled carbon nanotube.

The aqueous binder preferably contains a compound having an aromatic ring.

The compound having the aromatic ring is preferably styrene-butadiene rubber.

The current collector preferably has a second surface facing opposite to the first surface, and the positive electrode is preferably a bipolar electrode in which the positive electrode active material layer is formed on the first surface of the current collector and a negative electrode active material layer is formed on the second surface of the current collector.

The positive electrode active material layer preferably contains the aqueous binder in an amount of 0.8% by mass to 2.0% by mass, and the positive electrode active material layer contains the single-walled carbon nanotube in an amount of 0.01% by mass to 0.1% by mass.

The positive electrode active material preferably has a carbon coating on a surface of the positive electrode active material.

The positive electrode active material is preferably a polyanionic compound having an olivine-type structure.

A power storage device to solve the problem includes: a positive electrode having a positive electrode active material layer provided on a first surface of a positive current collector; a negative electrode having a negative electrode active material layer provided on a first surface of a negative current collector, the negative electrode active material layer facing the positive electrode active material layer of the positive electrode; a separator disposed between the positive electrode active material layer and the negative electrode active material layer; and a spacer disposed between the first surface of the positive current collector and the first surface of the negative current collector, and bonded to the first surface of the positive current collector and the first surface of the negative current collector, wherein the positive electrode is the positive electrode for the above-described power storage device.

### Advantageous Effects of Invention

According to the present invention, cracking in a positive electrode active material layer caused by bending load may be suppressed.

### BRIEF DESCRIPTION OF DRAWINGS

[FIG. 1] FIG. 1 is a cross-sectional view of a positive electrode according to a first embodiment.
[FIG. 2] FIG. 2 is a cross-sectional view of a power storage device.
[FIG. 3] FIG. 3 is a cross-sectional view of a bipolar electrode according to a second embodiment.

### DESCRIPTION OF EMBODIMENTS

The following will describe one embodiment of the present invention with reference to the accompanying drawings.

### [First embodiment]

### <Positive electrode>

A positive electrode of the first embodiment is used as an electrode of a power storage device. The power storage device is, for example, a secondary battery, such as a nickel-metal hydride secondary battery or a lithium-ion secondary battery. Alternatively, the power storage device may be an electric double layer capacitor. In the following description, an electrode of a lithium-ion secondary battery serves as the positive electrode.

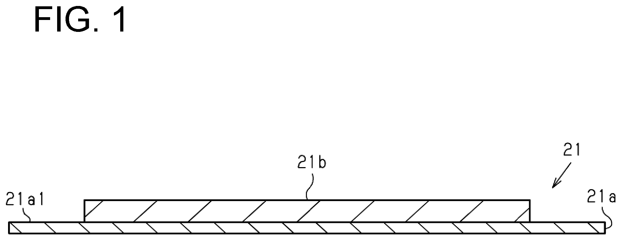

As illustrated in FIG. 1, a positive electrode 21 includes a positive current collector 21a having a first surface 21a1 and a positive electrode active material layer 21b formed on the first surface 21a1 of the positive current collector 21a. In the present embodiment, the positive current collector 21a corresponds to the current collector of the present claims.

### [Positive current collector]

The positive current collector 21a is a chemically inactive electrical conductor for continuously passing an electric current through the positive electrode active material layer 21b, while the lithium-ion secondary battery is discharged or charged. The positive current collector 21a has a shape, such as a foil-like shape, which allows the positive current collector 21a to be bent and deformed in a curved state. The thickness of the foil-like positive current collector 21a is, for example, 5 µm or more, preferably 10 µm or more. The thickness of the foil-like positive current collector 21a is, for example, 100 µm or less, preferably 60 µm or less.

Examples of the positive current collector 21a include an aluminum current collector having an aluminum surface that corresponds to the first surface 21a1. The aluminum current collector may have a monolithic structure consisting entirely of aluminum, or may have a composite structure consisting of an aluminum portion and a portion made of another material. Examples of the monolithic structure include an aluminum foil. Examples of the composite structure include a multi-walled structure in which an aluminum layer forms the first surface 21a1, and a substrate having a surface, which includes the first surface 21a1, coated with an aluminum film.

The positive current collector 21a may be formed of a material other than aluminum. Examples of the material other than aluminum may include a metallic material, a conductive resin material, and a conductive inorganic material. Examples of the metallic material include copper, nickel, titanium, stainless steel (e.g., SUS304, SUS316, SUS301, SUS304, and the like specified in JIS G 04305:2015). Examples of the conductive resin material include resin, and the like, in which a conductive filler is added to a conductive polymer material or a non-conductive polymer material, as necessary.

The first surface 21a1 of the positive current collector 21a may be coated with a known protective layer, such as a carbon coat layer. The first surface 21a1 of the positive current collector 21a may be treated by a known process, such as plating.

### [Positive electrode active material layer]

The positive electrode active material layer 21b is provided on the first surface 21a1 of the positive current collector 21a. The positive electrode active material layer 21b has an active material loading of more than 50 mg/cm², preferably 60 mg/cm² or more, more preferably 70 mg/cm² or more. The energy density of the lithium-ion secondary battery including the positive electrode 21 may be effectively increased by increasing the active material loading to exceed 50 mg/cm². Furthermore, the battery characteristics, such as battery capacity and long-term output power, may be increased by increasing the energy density of the lithium-ion secondary battery.

The active material loading of the positive electrode active material layer 21b is, for example, 90 mg/cm² or less, preferably 80 mg/cm² or less. When the active material loading is 90 mg/cm² or less, the thickness of the positive electrode active material layer 21b is reduced and the low profile of the lithium-ion secondary battery including the positive electrode 21 is achieved. The active material loading of the positive electrode active material layer 21b is, for example, 50 mg/cm² or more.

The thickness of the positive electrode active material layer 21b is, for example, in a range of 200 µm to 600 µm. The density of the positive electrode active material layer 21b is, for example, in a range of 1.5 g/cm³ to 2.5 g/cm³. The positive electrode active material layer 21b may be subjected to pressing. The thickness of the positive electrode active material layer 21b subjected to the pressing is, for example, 200 µm or more, preferably 240 µm or more. The thickness of the positive electrode active material layer 21b subjected to the pressing is, for example, 530 µm or less, preferably 470 µm or less. The density of the positive electrode active material layer 21b subjected to the pressing is, for example, in a range of 1.7 g/cm³ to 2.5 g/cm³.

The positive electrode active material layer 21b contains a positive electrode active material, a particular positive electrode binder, and a single-walled carbon nanotube.

### (Positive electrode active material)

The positive electrode active material may store and release charge carriers, such as lithium ions. The positive electrode active material is not particularly limited, but may be an active material that is applicable as a positive electrode active material for a lithium-ion secondary battery. Examples of the positive electrode active material include a polyanionic compound having an olivine-type structure, a lithium composite metal oxide having a layered rock-salt structure, and a metal oxide having a spinel structure. The positive electrode active material may comprise a single type, or a mixture of two or more types.

The positive electrode active material is preferably a polyanionic compound having an olivine-type structure (hereinafter referred to as an olivine-type active material). The olivine-type active material may be a compound represented by the general formula LiMₕPO₄, for example. In the general formula LiMnPO₄, M represents at least one element selected from the group consisting of Mn, Fe, Co, Ni, Cu, Mg, Zn, V, Ca, Sr, Ba, Ti, Al, Si, B, Te, and Mo, and h represents a number satisfying 0 < h < 2. Specifically, examples of the olivine-type active material include an olivine-type lithium iron phosphate (LiFePO₄) and an olivine-type lithium manganese iron phosphate (LiMnFePO₄).

Although the particle shape of the positive electrode active material is not particularly limited, it is preferable that the primary particles of the positive electrode active material are aggregated into granules. The flexibility of the positive electrode active material layer 21b is increased by using the granules. The particle diameter of the primary particles of the granules is, for example, in a range of 50 nm to 500 nm. The particle diameter of the primary particles is determined by Small Angle X-ray Scattering (SAXS). Specifically, the particle diameter of the primary particles is a numerical value defined as the average particle diameter (D50) obtained from the particle size distribution of the primary particles, which is determined under the assumption that the primary particles are spherical. The average particle diameter (D50) of the granules is, for example, in a range of 5 µm to 15 µm. The average particle diameter (D50) of the granules may be measured by a laser diffraction particle size analyzer.

The positive electrode active material is preferably particles having a carbon coating on their surfaces. In this case, a hydrophobic interaction occurs between the particle surface of the positive electrode active material and the single-walled carbon nanotubes in the positive electrode active material layer 21b. This allows the positive electrode active material and the single-walled carbon nanotubes to function cooperatively, when a bending load is applied to the positive electrode active material layer 21b. A preferred example of the particles of the positive electrode active material having a carbon coating is particles having a core consisting of granules of an olivine-type active material and a carbon coating formed on the surface of the core.

The positive electrode active material layer 21b contains the positive electrode active material, for example, in an amount of 97% by mass or more, preferably in an amount of 98% by mass or more, more preferably in an amount of 98.5% by mass or more. The amount of the positive electrode active material in the positive electrode active material layer 21b is, for example, 99% by mass or less, preferably 98.8% by mass or less. The energy density of the lithium-ion secondary battery including the positive electrode 21 may be effectively increased by increasing the amount of the positive electrode active material to 97% by mass or more. Furthermore, the battery characteristics, such as battery capacity and long-term output power, may be increased by increasing the energy density of the lithium-ion secondary battery.

### (Particular positive electrode binder)

The particular positive electrode binder is an aqueous binder with a glass transition temperature of less than 7°C. The aqueous binder is a binder that is used by being dispersed or dissolved in an aqueous solvent and being mixed with the positive electrode active material.

The glass transition temperature of the particular positive electrode binder is less than 7°C, preferably 0°C or less, more preferably -5°C or less. The glass transition temperature of the particular positive electrode binder is less than 7°C, thereby increasing the flexibility of the positive electrode active material layer 21 b. The glass transition temperature of the particular positive electrode binder is, for example, -50°C or more.

The glass transition temperature is the onset temperature of the glass transition in the DSC curve measured at a heating rate of 10°C/min by a differential scanning calorimeter (DSC). The DSC curve is measured by a measurement method in accordance with JIS K 7121 (1987), except that the heating rate is 10°C/min. The onset temperature of the glass transition is the temperature at which the DSC curve begins to deviate from the low temperature base line.

Examples of the particular positive electrode binder include: various resin materials, such as fluorine-containing resins such as polyvinylidene fluoride, polytetrafluoroethylene, and fluororubber; thermoplastic resins such as polypropylene and polyethylene; imide resins such as polyimide and polyamideimide; alkoxysilyl group-containing resins; acrylic resins such as poly (meth)acrylic acid; styrene-butadiene rubber; carboxymethyl cellulose; alginates such as sodium alginate and ammonium alginate; water-soluble cellulose ester crosslinked products; and starch-acrylic acid graft polymers. The particular positive electrode binder contained in the positive electrode active material layer 21b may consist of a single type, or a combination of two or more types.

The glass transition temperature of the particular positive electrode binder may be adjusted by changing the degree of polymerization of the resin material and the composition ratio of the constituent units of the resin material. For example, when the styrene-butadiene rubber is used, the glass transition temperature may be adjusted by changing the ratio of butadiene to styrene in styrene-butadiene rubber as the composition ratio of the constituent units of the styrene-butadiene rubber. Specifically, the glass transition temperature of the styrene-butadiene rubber may be lowered by increasing the ratio of butadiene to styrene.

The particular positive electrode binder is preferably a compound having aromatic rings. In this case, π-π interactions occur between the aromatic rings of the particular positive electrode binder and the single-walled carbon nanotubes in the positive electrode active material layer 21b. This allows the particular positive electrode binder and the single-walled carbon nanotubes to function cooperatively, when a bending load is applied to the positive electrode active material layer 21b. Examples of the compound having aromatic rings include styrene-butadiene rubber.

The positive electrode active material layer 21b contains the particular positive electrode binder, for example, in an amount of 0.8% by mass or more, preferably in an amount of 0.9% by mass or more, more preferably in an amount of 1.0% by mass or more. The binding strength within the positive electrode active material layer 21b may be increased by increasing the amount of the particular positive electrode binder.

The amount of the particular positive electrode binder in the positive electrode active material layer 21b is, for example, 2.0% by mass or less, preferably 1.5% by mass or less, more preferably 1.3% by mass or less. The particular positive electrode binder is a component that does not contribute to charging and discharging in the positive electrode active material layer 21b. The energy density of the lithium-ion secondary battery may be increased by reducing the amount of the component that does not contribute to charging and discharging. Furthermore, the battery characteristics, such as battery capacity and long-term output power, may be increased by increasing the energy density of the lithium-ion secondary battery.

### (Single-walled carbon nanotube)

Carbon nanotubes may be roughly classified into two types: single-walled carbon nanotubes and multi-walled carbon nanotubes. Each single-walled carbon nanotube has a seamless tubular structure formed by rolling a single graphene sheet. In contrast, each multi-walled carbon nanotube is a nested structure formed by accommodating several single-walled carbon nanotubes having different diameters in one single-walled carbon nanotube. Therefore, the single-walled carbon nanotube is more flexible than multi-walled carbon nanotube.

The positive electrode active material layer 21b contains single-walled carbon nanotubes. In the positive electrode active material layer 21b, the single-walled carbon nanotubes may exist as bundles, each containing several tens of individual single-walled carbon nanotubes, for example.

The fiber length and the fiber diameter of each of the single-walled carbon nanotubes in the positive electrode active material layer 21b are not particularly limited. The fiber length of the single-walled carbon nanotube is, for example, in a range of 5 µm to 1000 µm. The fiber diameter of the single-walled carbon nanotube is, for example, in a range of 1 nm to 20 µm. The fiber length and the fiber diameter of the single-walled carbon nanotube may be measured, for example, by electron microscopes, such as a scanning electron microscope (SEM) and a transmission electron microscope (TEM).

The positive electrode active material layer 21b contains the single-walled carbon nanotubes, for example, in an amount of 0.01% by mass or more, preferably in an amount of 0.03% by mass or more. The amount of the single-walled carbon nanotubes in the positive electrode active material layer 21b is, for example, 0.1% by mass or less, preferably 0.07% by mass or less. The mass ratio of the particular positive electrode binder and the single-walled carbon nanotubes (particular positive electrode binder/single-walled carbon nanotubes) in the positive electrode active material layer 21b is, for example, in a range of 8 to 200.

### (Other components)

The positive electrode active material layer 21b may contain other components in addition to the positive electrode active material, the particular positive electrode binder, and the single-walled carbon nanotubes, as needed. Examples of the other components include another binder, a dispersant, a conductive additive, an electrolyte (polymer matrix, ion conductive polymer, electrolytic solution, or the like), and an electrolyte supporting salt (lithium salt) for enhancing ion conductivity. The type and amount of the other components are not particularly limited, and conventionally known knowledge about lithium-ion secondary batteries can be appropriately referred.

Examples of the dispersant include a sodium salt of carboxymethyl cellulose and an ammonium salt of the carboxymethyl cellulose. The positive electrode active material layer 21b contains the dispersant, for example, in an amount of 2.0% by mass or less, preferably in an amount of 1.0% by mass or less, more preferably in an amount of 0.5% by mass or less. The amount of the dispersant in the positive electrode active material layer 21b is, for example, 0.3% by mass or more.

Examples of the conductive additive include acetylene black, carbon black, and graphite. The positive electrode active material layer 21b contains the conductive additive, for example, such that the total amount of the conductive additive and the single-walled carbon nanotubes is 1.0% by mass or less, preferably 0.5% by mass or less, more preferably 0.1% by mass or less.

### <Method for manufacturing positive electrode>

Next, the method for manufacturing the positive electrode 21 will be described.

The method for manufacturing the positive electrode 21 includes a coating step for applying a positive electrode composition onto the positive current collector 21a and a drying step for drying the positive electrode composition applied on the positive current collector 21a.

The positive electrode composition is a mixture which is solidified to the positive electrode active material layer 21b. The positive electrode composition is, for example, a slurry. The positive electrode composition may contain the positive electrode active material, the particular positive electrode binder, the single-walled carbon nanotubes, the aqueous solvent, and, as needed, other components. The positive electrode active material, the particular positive electrode binder, the single-walled carbon nanotubes, and the other components contained in the positive electrode composition are the same as those in the positive electrode active material layer described above.

The aqueous solvent is water, or a mixture of water and an organic solvent. It is preferred that the aqueous solvent has a water content of 50% by mass to 100% by mass. The aqueous solvent is mixed into the positive electrode composition so that, for example, the solid content of the positive electrode composition is in a range of 60% by mass to 80% by mass.

The coating step is a step for applying the positive electrode composition onto the first surface 21a1 of the positive current collector 21a to form a positive electrode composition coating layer. Examples of the method for applying the positive electrode composition include a roll coating, a die coating, a reverse roll coating, a doctor blade coating, a knife coating, a gravure coating, a dip coating, and a squeeze coating. The positive electrode composition may be applied continuously or intermittently onto the first surface 21a1 of the positive current collector 21a. The thickness of the positive electrode composition coating layer is adjusted so that the active material loading of the positive electrode active material layer 21b finally obtained exceeds 50 mg/cm². In addition, the length and width of the positive electrode composition coating layer is determined appropriately according to the size of the lithium-ion secondary battery.

The drying step is a step for drying the coating layer on the positive current collector 21a to remove the aqueous solvent and solidify the coating layer. The coating layer is solidified to the positive electrode active material layer 21b through the drying step. Examples of the method for drying the coating layer include natural drying, low temperature air, hot air, vacuum, infrared, far-infrared, electron beam, microwave, and the like. Two or more of these drying methods may be combined. The drying temperature is, for example, in a range of 20°C to 120°C, preferably in a range of 40°C to 100°C.

Furthermore, a compression step for compressing the positive electrode active material layer 21b may be performed after the drying step in order to increase the electrode density. This compression step corresponds to the pressing described above. Examples of the method for compressing the positive electrode active material layer 21b include die pressing and calendaring. The press pressure is, for example, in a range of 0.1 t/cm² or more to 10 t/cm² or less, preferably in a range of 0.5 t/cm² or more to 5.0 t/cm² or less.

When the compression step is performed, the thickness of the positive electrode active material layer 21b before the compression step, i.e., the thickness of the positive electrode active material layer 21b before the pressing, is, for example, 227 µm or more, preferably 273 µm or more. The thickness of the positive electrode active material layer 21b before the pressing is, for example, 600 µm or less, preferably 533 µm or less. The density of the positive electrode active material layer 21b before the pressing is, for example, in a range of 1.5 g/cm³ to 2.2 g/cm³.

A roll winding step for winding the positive current collector 21a into a roll may be performed between the above steps and at least one timing after all the steps have been performed. In addition, the drying step may be performed again after the compression step.

The method for manufacturing the positive electrode includes a bending step for bending the positive current collector 21a on which the positive electrode active material layer 21b is formed into a curved shape after the drying step. The curved shape is a shape in which at least a portion of the positive electrode active material layer 21b has a particular radius of curvature or less, for example, 26 mm or less, or 25.5 mm or less.

Examples of the bending step include a core winding step for winding the positive current collector 21a having the positive electrode active material layer 21b on a core material and a bending step for curving the positive current collector 21a along the peripheral surface of a cylindrical body. The core winding step corresponds to the roll winding step, for example. For example, the bending step corresponds to a step for curving the positive current collector 21a along the outer peripheral surface of the cylindrical body, such as a guide roller or a tension roller, while the positive current collector 21a having the positive electrode active material layer 21b is conveyed by the roller. The bending step may be performed once or multiple times.

### <Power storage device>

Next, one example of the power storage device, which includes the positive electrode 21, will be described.

The power storage device that includes the positive electrode 21 is, for example, a lithium-ion secondary battery that is used for a battery of various vehicles, such as a forklift truck, a hybrid electric vehicle, and an electric vehicle.

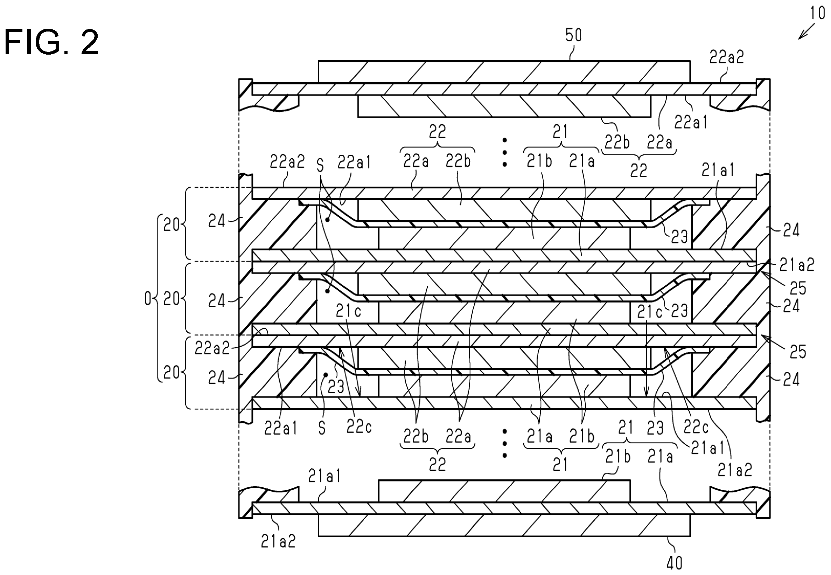

As is illustrated in FIG. 2, the power storage device 10 includes a cell stack 30 (stack) in which multiple power storage cells 20 are stacked (laminated) in a stacking direction. Hereinafter, the stacking direction of the power storage cells 20 is simply referred to as a stacking direction. Each power storage cell 20 includes the positive electrode 21, the negative electrode 22, a separator 23, and a spacer 24.

The positive electrode 21 includes a positive current collector 21a, and the positive electrode active material layer 21b provided on the first surface 21a1 of the positive current collector 21a. In plan view, the positive electrode active material layer 21b is formed in the central portion of the first surface 21a1 of the positive current collector 21a. The peripheral portion of the first surface 21a1 of the positive current collector 21a in plan view is a positive electrode composition uncoated portion 21c on which the positive electrode active material layer 21b is not provided. In plan view, the positive electrode active material layer 21b is surrounded by the positive electrode composition uncoated portion 21c.

The negative electrode 22 includes a negative current collector 22a, and a negative electrode active material layer 22b, which is provided on a first surface 22a1 of the negative current collector 22a. In plan view, the negative electrode active material layer 22b is formed in the central portion of the first surface 22a1 of the negative current collector 22a. The peripheral portion of the first surface 22a1 of the negative current collector 22a in plan view is a negative electrode composition uncoated portion 22c on which the negative electrode active material layer 22b is not provided. In plan view, the negative electrode active material layer 22b is surrounded by the negative electrode composition uncoated portion 22c.

The positive electrode 21 and the negative electrode 22 are arranged so that the positive electrode active material layer 21b and the negative electrode active material layer 22b face each other in the stacking direction. In other words, the direction in which the positive electrode 21 and the negative electrode 22 face each other is aligned with the stacking direction. The negative electrode active material layer 22b is formed to have the same size as the positive electrode active material layer 21b, or is formed to be slightly larger than the positive electrode active material layer 21b. In a case in which the negative electrode active material layer 22b is formed to be slightly larger than the positive electrode active material layer 21b, the entire region in which the positive electrode active material layer 21b is formed is located within the region in which the negative electrode active material layer 22b is formed, in plan view.

The positive current collector 21a has a second surface 21a2, which is a surface opposite to the first surface 21a1. The positive electrode 21 is an electrode having a monopolar structure in which neither the positive electrode active material layer 21b nor the negative electrode active material layer 22b is formed on the second surface 21a2 of the positive current collector 21a. The negative current collector 22a has a second surface 22a2, which is a surface opposite to the first surface 22a1. The negative electrode 22 is an electrode having a monopolar structure in which neither the positive electrode active material layer 21b nor the negative electrode active material layer 22b is formed on the second surface 22a2 of the negative current collector 22a.

The separator 23 is a member that is disposed between the positive electrode 21 and the negative electrode 22 and separates both the electrodes from each other to prevent a short circuit due to contact between the positive electrode 21 and the negative electrode 22, and allows lithium ions to pass therethrough.

The separator 23 is, for example, a porous sheet or nonwoven fabric containing a polymer that absorbs and retains an electrolyte. Examples of the material of the separator 23 include polyolefins, such as polypropylene and polyethylene, and polyesters. The separator 23 may have a single-walled structure or a multi-walled structure. Examples of the multi-walled structure may include an adhesive layer, and a ceramic layer as a heat-resistant layer.

The spacer 24 is disposed between the first surface 21a1 of the positive current collector 21a of the positive electrode 21 and the first surface 22a1 of the negative current collector 22a of the negative electrode 22, and outside of the positive electrode active material layer 21b and the negative electrode active material layer 22b, and the spacer 24 is bonded to both the positive current collector 21a and the negative current collector 22a. The spacer 24 maintains the distance between the positive current collector 21a and the negative current collector 22a to prevent a short circuit between the current collectors, and provides a liquid-tight seal between the current collectors.

The spacer 24 has a frame shape that extends along the peripheral edge portions of the positive current collector 21a and the negative current collector 22a and surrounds the positive current collector 21a and the negative current collector 22a in plan view. The spacer 24 is disposed between the positive electrode composition uncoated portion 21c of the first surface 21a1 of the positive current collector 21a and the negative electrode composition uncoated portion 22c of the first surface 22a1 of the negative current collector 22a.

Examples of the material of the spacer 24 include various resin materials, such as polyethylene (PE), modified polyethylene (modified PE), polystyrene (PS), polypropylene (PP), modified polypropylene (modified PP), ABS resin, and AS resin.

The power storage cell 20 has a sealed space S that is surrounded by the frame-shaped spacer 24, the positive electrode 21, and the negative electrode 22. The separator 23 and the electrolyte are accommodated in the sealed space S. The peripheral edge portion of the separator 23 is embedded in the spacer 24.

The electrolyte is, for example, a liquid electrolyte. The liquid electrolyte, for example, contains a nonaqueous solvent and an electrolyte salt that is dissolved in the nonaqueous solvent. As the electrolyte salt, known lithium salts, such as LiClO₄, LiAsF₆, LiPF₆, LiBF₄, LiCF₃SO₃, LiN(FSO₂)₂, and LiN(CF₃SO₂)₂, may be used. As the nonaqueous solvent, known solvents, such as cyclic carbonates, cyclic esters, chain carbonates, chain esters, and ethers, may be used. These known solvent materials may be used in combination of two or more types.

The spacer 24 seals the sealed space S between the positive electrode 21 and the negative electrode 22, thereby suppressing leakage of the electrolyte accommodated in the sealed space S to the outside. The spacer 24 also prevents entry of water into the sealed space S from the outside of the power storage device 10. Furthermore, the spacer 24 prevents, for example, leakage of gas that has been generated from the positive electrode 21 or the negative electrode 22 due to a charge and discharge reaction or the like, to the outside of the power storage device 10.

The cell stack 30 has a structure in which the power storage cells 20 are stacked so that the second surface 21a2 of the positive current collector 21a and the second surface 22a2 of the negative current collector 22a are in contact with each other. Accordingly, the power storage cells 20 of the cell stack 30 are connected in series.

In the cell stack 30, two power storage cells 20 are adjacent to each other in the stacking direction, and thereby a pseudo bipolar electrode 25 is formed in which the positive current collector 21a and the negative current collector 22a in contact with each other are regarded as one current collector. The pseudo bipolar electrode 25 includes: a current collector having a structure in which the positive current collector 21a and the negative current collector 22a are stacked; the positive electrode active material layer 21b formed on one surface of the current collector; and the negative electrode active material layer 22b formed on the other surface of the current collector.

The power storage device 10 includes a pair of conductive bodies, which are a positive electrode conductive plate 40 and a negative electrode conductive plate 50, and are arranged so that the cell stack 30 is disposed between the positive electrode conductive plate 40 and the negative electrode conductive plate 50 in the stacking direction of the cell stack 30. The positive electrode conductive plate 40 and the negative electrode conductive plate 50 are each made of a material excellent in conductivity.

The positive electrode conductive plate 40 is electrically connected to the second surface 21a2 of the positive current collector 21a of the positive electrode 21, which is arranged on the outermost side at one end in the stacking direction. The negative electrode conductive plate 50 is electrically connected to the second surface 22a2 of the negative current collector 22a of the negative electrode 22, which is arranged on the outermost side at the other end in the stacking direction. The power storage device 10 is charged and discharged through terminals provided on the positive electrode conductive plate 40 and the negative electrode conductive plate 50, respectively.

Next, operation and effects of the first embodiment will be described.

(1-1) The positive electrode 21 for the power storage device includes the positive current collector 21a having the first surface 21a1, and the positive electrode active material layer 21b formed on the first surface 21a1 of the positive current collector 21a. The positive electrode active material layer 21b contains the positive electrode active material that is capable of storing and releasing charge carriers. The positive electrode active material layer 21b has the active material loading of more than 50 mg/cm², and contains the positive electrode active material in an amount of 97% by mass or more. The positive electrode active material layer 21b contains the aqueous binder with a glass transition temperature of less than 7°C (particular positive electrode binder), and the single-walled carbon nanotubes.

According to this configuration, the aqueous binder with a glass transition temperature of less than 7°C and the single-walled carbon nanotubes contained in the positive electrode active material layer 21b function cooperatively to form the positive electrode active material layer 21b having high flexibility. This suppresses cracking in the positive electrode active material layer 21b caused when a bending load is applied to the positive electrode active material layer 21b in the bending step or the like during the manufacturing of the positive electrode 21. This therefore suppresses the positive electrode active material layer 21b from separating from the positive current collector 21a when a load is applied to the positive electrode 21 during the manufacturing of the power storage device including the positive electrode 21.

(1-2) The aqueous binder (particular positive electrode binder) contains a compound having aromatic rings.

In this case, π-π interactions occur between the aromatic rings of the aqueous binder and the single-walled carbon nanotubes, which facilitates the cooperative function of the aqueous binder and the single-walled carbon nanotubes. This allows the positive electrode active material layer 21b to have higher flexibility.

(1-3) The power storage device 10 includes the positive electrode 21, the negative electrode 22, the separator 23, and the spacer 24. In the positive electrode 21, the positive electrode active material layer 21b is provided on the first surface 21a1 of the positive current collector 21a. In the negative electrode 22, the negative electrode active material layer 22b is provided on the first surface 22a1 of the negative current collector 22a, and the negative electrode active material layer 22b faces the positive electrode active material layer 21b of the positive electrode 21. The separator 23 is disposed between the positive electrode active material layer 21b and the negative electrode active material layer 22b. The spacer 24 is disposed between the first surface 21a1 of the positive current collector 21a and the first surface 22a1 of the negative current collector 22a, and bonded to the first surface 21a1 of the positive current collector 21a and the first surface 22a1 of the negative current collector 22a.

When the power storage device having such a configuration is manufactured, it is necessary to perform stacking the positive electrode 21 and the negative electrode 22 between which the separator 23 and the spacer 24 are disposed, and bonding between the positive electrode 21 and the spacer 24. Accordingly, as a result of many loads being applied to the positive electrode active material layer 21b of the positive electrode 21 compared to the case of manufacturing a general square battery, a laminate battery, and a cylindrical battery, the positive electrode active material layer 21b tends to separate from the positive current collector 21a during manufacturing. Therefore, when the power storage device 10 having such a configuration includes the positive electrode 21 of the present embodiment, the effect of suppressing the separation of the positive electrode active material layer 21b from the positive current collector 21a is obtained more significantly.

### [Second embodiment]

Next, a bipolar electrode according to a second embodiment will be described. The bipolar electrode may be used, for example, in place of the pseudo bipolar electrode 25 of the power storage device 10.

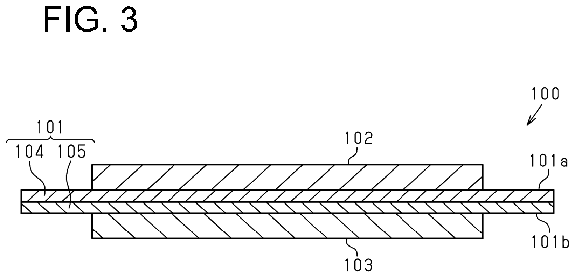

As illustrated in FIG. 3, a bipolar electrode 100 includes a bipolar current collector 101, a positive electrode active material layer 102, and a negative electrode active material layer 103. In the present embodiment, the bipolar current collector 101 corresponds to the current collector of the present claims.

The bipolar current collector 101 is a chemically inactive electrical conductor for continuously passing an electric current through the positive electrode active material layer 102 and the negative electrode active material layer 103, while the power storage device is discharged or charged. The bipolar current collector 101 has a shape, such as a foil-like shape, which allows the bipolar current collector 101 to be bent and deformed in a curved state. The bipolar current collector 101 has a first surface 101a and a second surface 101b facing opposite to the first surface 101a. The first surface 101a and the second surface 101b are orthogonal surfaces to the thickness direction of the bipolar current collector 101.

The bipolar current collector 101 is a stack in which a positive current collector 104 and a negative current collector 105 are integrally bonded in the thickness direction. The first surface 101a of the bipolar current collector 101 is formed by the positive current collector 104. The second surface 101b of the bipolar current collector 101 is formed by the negative current collector 105. The positive electrode active material layer 102 is provided on the first surface 101a of the bipolar current collector 101. The negative electrode active material layer 103 is provided on the second surface 101b of the bipolar current collector 101.

### [Positive current collector and positive electrode active material layer]

The positive current collector 104 is a chemically inactive electrical conductor for continuously passing an electric current through the positive electrode active material layer 102, while the lithium-ion secondary battery is discharged or charged. The configuration of the positive current collector 104 is the same as that of the positive current collector 21a of the first embodiment. The configuration of the positive electrode active material layer 102 is the same as that of the positive electrode active material layer 21b of the first embodiment.

### [Negative current collector]

The negative current collector 105 is a chemically inactive electrical conductor for continuously passing an electric current through the negative electrode active material layer 103, while the lithium-ion secondary battery is discharged or charged. The thickness of the negative current collector 105 is, for example, 4 µm or more, preferably 6 µm or more. The thickness of the negative current collector 105 is, for example, 20 µm or less, preferably 10 µm or less.

Examples of the negative current collector 105 include a copper current collector having a copper surface that corresponds to the second surface 101b. The copper current collector may have a monolithic structure consisting entirely of copper, or may have a composite structure consisting of a copper portion and a portion made of another material. Examples of the monolithic structure include a copper foil. Examples of the composite structure include a multi-walled structure in which a copper layer forms the second surface 101b, and a substrate having a surface, which includes the second surface 101b, coated with a copper film.

The negative current collector 105 may be formed of a material other than copper. Examples of the material other than copper may include a metallic material, a conductive resin material, and a conductive inorganic material. Examples of the metallic material include aluminum, nickel, titanium, stainless steel (e.g., SUS304, SUS316, SUS301, SUS304, and the like specified in JIS G 04305:2015). Examples of the conductive resin material include resin, or the like, in which a conductive filler is added to a conductive polymer material or a non-conductive polymer material, as necessary.

Examples of a preferred combination of the positive current collector 104 and the negative current collector 105 of the bipolar current collector 101 include a combination of the positive current collector 104 formed of an aluminum foil and the negative current collector 105 formed of a copper foil. Examples of the bipolar current collector 101 include a current collector in which aluminum foils are bonded to each other, a current collector in which an aluminum foil and a copper foil are bonded to each other, and a current collector in which a copper plating is applied to the surface of an aluminum foil.

### [Negative electrode active material layer]

The negative electrode active material layer 103 has, for example, an active material loading of 20 mg/cm² or more, preferably 30 mg/cm² or more. The energy density of the lithium-ion secondary battery including the bipolar electrode 100 may be effectively increased by increasing the active material loading to 20 mg/cm² or more. Furthermore, the battery characteristics, such as battery capacity and long-term output power, may be increased by increasing the energy density of the lithium-ion secondary battery.

The active material loading of the negative electrode active material layer 103 is, for example, 50 mg/cm² or less, preferably 40 mg/cm² or less. When the active material loading is 50 mg/cm² or less, the thickness of the negative electrode active material layer 103 is reduced and the low profile of the lithium-ion secondary battery including the bipolar electrode 100 is achieved. The active material loading of the negative electrode active material layer 103 is, for example, 20 mg/cm² or more.

The thickness of the negative electrode active material layer 103 is, for example, in a range of 125 µm to 556 µm. The density of the negative electrode active material layer 103 is, for example, in a range of 0.9 g/cm³ to 1.6 g/cm³. The negative electrode active material layer 103 may be subjected to pressing. The thickness of the negative electrode active material layer 103 subjected to the pressing is, for example, 125 µm or more, preferably 187 µm or more. The thickness of the negative electrode active material layer 103 subjected to the pressing is, for example, 500 µm or less, preferably 400 µm or less. The density of the negative electrode active material layer 103 subjected to the pressing is, for example, in a range of 1.0 g/cm³ to 1.6 g/cm³.

The negative electrode active material layer 103 contains a negative electrode active material, a particular negative electrode binder, and a single-walled carbon nanotube.

### (Negative electrode active material layer)

The negative electrode active material may store and release charge carriers, such as lithium ions. The negative electrode active material is graphite. Examples of the graphite include natural graphite, artificial graphite, hard carbon (non-graphitizable carbon), and soft carbon (graphitizable carbon). Examples of the artificial graphite include highly oriented graphite and mesocarbon microbeads. The graphite may comprise a single type, or may comprise a mixture of two or more types.

The graphite preferably contains a large amount of graphitic structures. The G/D ratio of the graphite, as obtained from Raman spectroscopic analysis, is for example, 2 or more, preferably 3 or more. Furthermore, the G/D ratio of the graphite is, for example, 5 or less, preferably 4 or less. The G/D ratio is defined as the ratio of the peak intensity IB to the peak intensity IA in a Raman spectrum obtained by Raman spectroscopic analysis with an argon ion laser, where the peak intensity IA corresponds to a peak within a range of 1570 cm⁻¹ to 1620 cm⁻¹, and the peak intensity IB corresponds to a peak within a range of 1350 cm⁻¹ to 1370 cm⁻¹. When the graphite contains a large amount of graphitic structures, π-π interactions occur with the single-walled carbon nanotubes in the negative electrode active material layer 103. This allows the particular negative electrode binder and the single-walled carbon nanotubes to function cooperatively, when a bending load is applied to the negative electrode active material layer 103.

The average particle diameter (D50) of the granules of the graphite is, for example, in a range of 10 µm to 20 µm. The average particle diameter (D50) of the granules of the graphite may be measured by a laser diffraction particle size analyzer.

The negative electrode active material layer 103 contains the negative electrode active material, for example, in an amount of 90% by mass or more, preferably in an amount of 95% by mass or more, more preferably in an amount of 96.5% by mass or more. The amount of the negative electrode active material in the negative electrode active material layer 103 is, for example, 98% by mass or less, preferably 97.5% by mass or less. The energy density of the lithium-ion secondary battery including the bipolar electrode 100 may be effectively increased by increasing the amount of the negative electrode active material to 90% by mass or more. Furthermore, the battery characteristics, such as battery capacity and long-term output power, may be increased by increasing the energy density of the lithium-ion secondary battery.

### (Particular negative electrode binder)

The particular negative electrode binder is an aqueous binder with a glass transition temperature of less than 7°C. The aqueous binder is a binder that is used by being dispersed or dissolved in an aqueous solvent and being mixed with the negative electrode active material.

The glass transition temperature of the particular negative electrode binder is less than 7°C, preferably 0°C or less, more preferably -5°C or less. The glass transition temperature of the particular negative electrode binder is less than 7°C, thereby increasing the flexibility of the negative electrode active material layer 103.

Examples of the particular negative electrode binder include various resin materials, such as fluorine-containing resins such as polyvinylidene fluoride, polytetrafluoroethylene, and fluororubber; thermoplastic resins such as polypropylene and polyethylene; imide resins such as polyimide and polyamideimide; alkoxysilyl group-containing resins; acrylic resins such as poly (meth)acrylic acid; styrene-butadiene rubber; carboxymethyl cellulose; alginates such as sodium alginate and ammonium alginate; water-soluble cellulose ester crosslinked products; and starch-acrylic acid graft polymers. The particular negative electrode binder contained in the negative electrode active material layer 103 may consist of a single type, or a combination of two or more types.

The glass transition temperature of the particular negative electrode binder may be adjusted by changing the degree of polymerization of the resin material and the composition ratio of the constituent units of the resin material. For example, when the styrene-butadiene rubber is used, the glass transition temperature may be adjusted by changing the ratio of butadiene to styrene in styrene-butadiene rubber as the composition ratio of the constituent units of the styrene-butadiene rubber. Specifically, the glass transition temperature of the styrene-butadiene rubber may be lowered by increasing the ratio of butadiene to styrene.

The particular negative electrode binder is preferably a compound having aromatic rings. In this case, π-π interactions occur between the aromatic rings of the particular negative electrode binder and the single-walled carbon nanotubes and between the aromatic rings of the particular negative electrode binder and the graphite in the negative electrode active material layer 103. This allows the particular negative electrode binder and the single-walled carbon nanotubes to function cooperatively, and allows the particular negative electrode binder and the graphite to function cooperatively, when a bending load is applied to the negative electrode active material layer 103. Examples of the compound having aromatic rings include styrene-butadiene rubber.

The negative electrode active material layer 103 contains the particular negative electrode binder, for example, in an amount of 2.0% by mass or more, preferably in an amount of 2.3% by mass or more. The binding strength within the negative electrode active material layer 103 may be increased by increasing the amount of the particular negative electrode binder. The amount of the particular negative electrode binder in the negative electrode active material layer 103 is, for example, 4.0% by mass or less, preferably 3.0% by mass or less. The particular negative electrode binder is a component that does not contribute to charging and discharging in the negative electrode active material layer 103. The energy density of the lithium-ion secondary battery may be increased by reducing the amount of the component that does not contribute to charging and discharging. Furthermore, the battery characteristics, such as battery capacity and long-term output power, may be increased by increasing the energy density of the lithium-ion secondary battery.

### (Single-walled carbon nanotube)

In the negative electrode active material layer 103, the single-walled carbon nanotubes may exist as bundles, each containing several tens of individual single-walled carbon nanotubes, for example.

The fiber length and the fiber diameter of each of the single-walled carbon nanotubes in the negative electrode active material layer 103 are not particularly limited. The fiber length of the single-walled carbon nanotube is, for example, in a range of 5 µm to 1000 µm. The fiber diameter of the carbon nanotube is, for example, in a range of 1 nm to 10 µm. The fiber length and the fiber diameter of the single-walled carbon nanotube may be measured, for example, by electron microscopes, such as a scanning electron microscope (SEM) and a transmission electron microscope (TEM).

The amount of the single-walled carbon nanotubes in the negative electrode active material layer 103 is, for example, 0.001% by mass or more, preferably 0.005% by mass or more. The amount of the single-walled carbon nanotubes in the negative electrode active material layer 103 is, for example, 0.02% by mass or less, preferably 0.015% by mass or less. In addition, the mass ratio of the particular negative electrode binder and the single-walled carbon nanotubes (particular negative electrode binder/single-walled carbon nanotubes) in the negative electrode active material layer 103 is, for example, in a range of 100 to 4000.

### (Other components)

The negative electrode active material layer 103 may contain other components in addition to the negative electrode active material, the particular negative electrode binder, and the single-walled carbon nanotubes, as needed. Examples of the other components include another binder, a dispersant, a conductive additive, an electrolyte (polymer matrix, ion conductive polymer, electrolytic solution, or the like), and an electrolyte supporting salt (lithium salt) for enhancing ion conductivity. The type and amount of the other components are not particularly limited, and conventionally known knowledge about lithium-ion secondary batteries can be appropriately referred.

Examples of the dispersant include a sodium salt of carboxymethyl cellulose and an ammonium salt of the carboxymethyl cellulose. The amount of the dispersant in the negative electrode active material layer 103 is, for example, 1.0 by mass or less, preferably 0.5% by mass or less. The amount of the dispersant in the negative electrode active material layer 103 is, for example, 0.3% by mass or more.

Examples of the conductive additive include acetylene black, carbon black, and graphite. The negative electrode active material layer 103 contains the conductive additive, for example, such that the total amount of the conductive additive and the single-walled carbon nanotubes is 0.5% by mass or less, preferably 0.1% by mass or less.

### <Method for manufacturing bipolar electrode>

Next, the method for manufacturing the bipolar electrode 100 will be described.

The method for manufacturing the bipolar electrode 100 includes a positive electrode formation step and a negative electrode formation step.

The positive electrode formation step includes a positive electrode composition coating step for applying a positive electrode composition onto the first surface 101a of the bipolar current collector 101 and a positive electrode composition drying step for drying the positive electrode composition applied on the bipolar current collector 101. The positive electrode composition coating step and the positive electrode composition drying step are the same as the coating step and the drying step of the method for manufacturing the positive electrode described above, except that the bipolar current collector 101 for the bipolar electrode 100 is used in place of the positive current collector 21a.

The negative electrode formation step includes a negative electrode composition coating step for applying a negative electrode composition onto the second surface 101b of the bipolar current collector 101 and a negative electrode composition drying step for drying the negative electrode composition applied on the bipolar current collector 101.

The negative electrode composition is a mixture which is solidified to the negative electrode active material layer 103. The negative electrode composition is, for example, a slurry. The negative electrode composition may contain the negative electrode active material, the particular negative electrode binder, the single-walled carbon nanotubes, the aqueous solvent, and as needed, other components. The negative electrode active material, the particular negative electrode binder, the single-walled carbon nanotubes, and the other components contained in the negative electrode composition are the same as those in the negative electrode active material layer described above.

The aqueous solvent is water, or a mixture of water and an organic solvent. It is preferred that the aqueous solvent has a water content of 50% by mass to 100% by mass. The aqueous solvent is mixed into the negative electrode composition so that, for example, the solid content is in a range of 50% by mass to 65% by mass.

The negative electrode composition coating step and the negative electrode composition drying step are the same as the positive electrode composition coating step and the positive electrode composition drying step, except that the negative electrode composition is used in place of the positive electrode composition. The thickness of the coating layer formed in the negative electrode composition coating step is adjusted so that the active material loading of the negative electrode active material layer 103 finally obtained is 20 mg/cm² or more.

The positive electrode formation step and the negative electrode formation step are performed in any order. For example, the negative electrode formation step may be performed after the positive electrode formation step is performed, or the positive electrode formation step may be performed after the negative electrode formation step is performed. Furthermore, some or all of the positive electrode formation step and the negative electrode formation step may be performed simultaneously. For example, the positive electrode composition coating layer and the negative electrode composition coating layer may be dried simultaneously after the positive electrode composition is applied onto the first surface 101a of the bipolar current collector 101 and the negative electrode composition is applied onto the first surface 101a of the bipolar current collector 101 simultaneously.

Furthermore, in order to increase the electrode density, a compression step for compressing one or both of the positive electrode active material layer 102 and the negative electrode active material layer 103 may be performed after one or both of the positive electrode composition drying step and the negative electrode composition drying step are performed. The compression step is the same as the compression step of the method for manufacturing the positive electrode.

When the compression step is performed, the thickness of the negative electrode active material layer 103 before the compression step, i.e., the thickness of the negative electrode active material layer 103 before the pressing, is, for example, 167 µm or more, preferably 250 µm or more. The thickness of the negative electrode active material layer 103 before the pressing is, for example, 556 µm or less, preferably 444 µm or less. The density of the negative electrode active material layer 103 before the pressing is, for example, in a range of 0.9 g/cm³ to 1.2 g/cm³.

A roll winding step for winding the bipolar current collector 101 into a roll may be performed at least once either between the above steps or after all the steps have been performed. One or both of the positive electrode composition drying step and the negative electrode composition drying step may be performed again after the compression step.

The method for manufacturing the bipolar electrode includes a bending step for curving the bipolar current collector 101 on which the positive electrode active material layer 102 is formed into a curved shape after the positive electrode composition drying step. The bending step is the same as the bending step of the method for manufacturing the positive electrode. If the negative electrode formation step is performed after the positive electrode formation step is performed, the bending step may be performed during the negative electrode formation step.

The bipolar electrode 100 of the second embodiment achieves the same effects mentioned in (1-1) to (1-3) described on the positive electrode 21 of the first embodiment. In addition, the second embodiment achieves the following effects.

(2-1) The bipolar electrode 100 includes the bipolar current collector 101 that has the first surface 101a and the second surface 101b facing opposite to the first surface 101a. The positive electrode active material layer 102 is formed on the first surface 101a of the bipolar current collector 101, and the negative electrode active material layer 103 is formed on the second surface 101b. The configuration of the positive electrode active material layer 102 is the same as that of the positive electrode active material layer 21b of the first embodiment.

The bipolar electrode 100 needs to have an active material layer on both the first surface 101a and the second surface 101b of the bipolar current collector 101. Accordingly, compared to a monopolar electrode that has an electrode on only one surface of the current collector, more bending steps in which a bending load is applied to the positive electrode active material layer 102 are required during the manufacturing, which is likely to cause cracking in the positive electrode **active** material layer 102. Therefore, the positive electrode active material layer 102 of the bipolar electrode 100 containing the aqueous binder with a glass transition temperature of less than 7°C and the single-walled carbon nanotubes exhibits a more pronounced effect in suppressing cracking in the positive electrode active material layer 102.

(2-2) The active material loading of the negative electrode active material layer 103 is 20 mg/cm² or more. The negative electrode active material layer 103 contains the negative electrode active material layer, the negative electrode binder with a glass transition temperature of less than 7°C, and the single-walled carbon nanotubes.

According to this configuration, the aqueous binder with a glass transition temperature of less than 7°C and the single-walled carbon nanotubes contained in the negative electrode active material layer 103 function cooperatively to form the negative electrode active material layer 103 having high flexibility. This suppresses cracking in the negative electrode active material layer 103 that occurs when a bending load is applied to the negative electrode active material layer 103. This therefore suppresses the negative electrode active material layer 103 from separating from the bipolar current collector 101 when a load is applied to the bipolar electrode 100 during the manufacturing of the power storage device.

The present embodiment may be modified as described below. The above-described embodiment and the following modifications may be implemented in combination with each other within such a range as not to be technically inconsistent.
o The configuration of the negative electrode active material layer 103 of the bipolar electrode 100 is not limited to the above embodiment, but the negative electrode active material layer 103 may have a configuration of a known negative electrode active material layer of the negative electrode of the power storage device.
o The planar shape of the positive current collector 21a and the positive electrode active material layer 21b is not particularly limited. For example, it may be a polygonal shape, such as a rectangular shape, or it may be a circular or oval shape.
o The planar shape of the negative current collector 22a and the negative electrode active material layer 22b is not particularly limited. For example, it may be a polygonal shape, such as a rectangular shape, or it may be a circular or oval shape.
o The positive electrode active material layer 21b may be provided on the second surface 21a2 of the positive current collector 21a.
o The number of the power storage cells 20 of the power storage device 10 is not particularly limited. For example, the number of the power storage cells 20 of the power storage device 10 may be one.

### Working examples

The following describes working examples according to the above embodiment.

### <Preparation of positive electrode>

The granules of LiFePO₄ (LFP) having a carbon coating layer, styrene-butadiene rubber (SBR), carbon nanotubes (CNT), and sodium carboxymethyl cellulose (CMC) were mixed in the blending ratios shown in Table 1 and Table 2, water was then added to the mixture to prepare a positive electrode composition having a solid content of 75% by mass.

The "CNT" column in Tables 1 and 2 shows the type of carbon nanotube used. The amount of carbon nanotubes in each example is adjusted so that the electrode resistance is approximately the same across all examples. The "Tg (°C) of SBR" column in Tables 1 and 2 shows the glass transition temperature of the styrene-butadiene rubber. The glass transition temperature is the onset temperature of the glass transition in the DSC curve measured by a DSC in accordance with JIS K 7121 (1987), except that the heating rate is 10°C/min.

An aluminum foil having a thickness of 30 µm was prepared as a current collector. The positive electrode composition was applied as a coating onto one surface of the current collector by the doctor blade method. The applied positive electrode composition was dried and solidified by heat treatment at 50°C, so that positive electrodes of working examples 1 to 3, comparative examples 1 to 3, and reference examples 1 and 2 were prepared in each of which the positive electrode active material layer having the active material loading of 50 mg/cm² or 75 mg/cm² was formed on the current collector.

### <Bending test>

For each example, a test sample having dimensions of 5 cm × 10 cm was prepared by cutting the positive electrode. The test sample was wrapped around the half of the outer peripheral surface of a cylindrical body, which has a diameter of 20 mm, with the surface of the test sample on which the positive electrode active material layer was formed facing outward, and the surface condition of the positive electrode active material layer was evaluated by visual inspection. The results are shown in Table 1 and Table 2. The criteria for the evaluation are as follows.

"Good": Cracking is not observed on the surface of the positive electrode active material layer.

"Poor": Cracking is observed on the surface of the positive electrode active material layer.

**[Table 1]**

| POSITIVE ELECTRODE ACTIVE MATERIAL LAYER | | WORKING EXAMPLE 1 | WORKING EXAMPLE 2 | WORKING EXAMPLE 3 |
|---|---|---|---|---|
| BLENDING RATIO (% BY MASS) | LFP | 98.25 | 98.55 | 98.25 |
| | SBR | 1.3 | 1.0 | 1.3 |
| | CNT | 0.05 | 0.05 | 0.05 |
| | CMC | 0.4 | 0.4 | 0.4 |
| ACTIVE MATERIAL LOADING | (mg/cm²) | 75 | 75 | 75 |
| Tg OF SBR (°C) | | -13 | -13 | -5 |
| CNT | | SINGLE-WALLED | SINGLE-WALLED | SINGLE-WALLED |
| BENDING TEST | | GOOD | GOOD | GOOD |

**[Table 2]**

| POSITIVE ELECTRODE ACTIVE MATERIAL LAYER | | COMP. EX. 1 | COMP. EX. 2 | COMP. EX. 3 | REF. EX. 1 | REF. EX. 2 |
|---|---|---|---|---|---|---|
| BLENDING RATIO (% BY MASS) | LFP | 98.25 | 96.5 | 98.3 | 98.3 | 98.3 |
| | SBR | 1.3 | 2.1 | 1.3 | 1.3 | 1.3 |
| | CNT | 0.05 | 0.6 | - | - | - |
| | CMC | 0.4 | 0.8 | 0.4 | 0.4 | 0.4 |
| ACTIVE MATERIAL LOADING | (mg/cm²) | 75 | 75 | 75 | 50 | 75 |
| Tg OF SBR | (°C) | 7 | -5 | -5 | 7 | 7 |
| CNT | | SINGLE-WALLED | MULTI-WALLED | - | - | - |
| BENDING TEST | | POOR | POOR | POOR | GOOD | POOR |

The positive electrode active material layers of the working examples 1 to 3 contain the aqueous binder with a glass transition temperature of less than 7°C and the single-walled carbon nanotubes. In the positive electrode active material layers of working examples 1 to 3, no cracking was observed. In contrast, in the positive electrode active material layer of comparative example 1 containing an aqueous binder with a glass transition temperature of 7°C instead of the aqueous binder with a glass transition temperature of less than 7°C, cracking was observed. In the positive electrode active material layer of comparative example 2 containing multi-walled carbon nanotubes instead of single-walled carbon nanotubes, and in the positive electrode active material layer of comparative example 3 containing no carbon nanotubes, cracking was observed. From these results, it can be seen that the effect of suppressing cracking in the positive electrode active material layer in working examples 1 to 3 is obtained through the cooperative function of the aqueous binder and the single-walled carbon nanotubes rather than function of either the aqueous binder with a glass transition temperature of less than 7°C or the single-walled carbon nanotubes.

Further, although detailed experimental data are omitted, the same bending test was performed for working examples 1 to 3 using a cylindrical body having a diameter of 13 mm instead of the cylindrical body having a diameter of 20 mm. As a result, in the positive electrode active material layer of working examples 1 to 3, no cracking was observed.

In reference examples 1 and 2, the aqueous binder with a glass transition temperature of 7°C is contained and the carbon nanotubes are not contained, and the active material loading of the positive electrode active material layer differs between reference example 1 and reference example 2. In reference example 1 where the active material loading of the positive electrode active material layer is 50 mg/cm², no cracking was observed in the positive electrode active material layer, whereas in reference example 2 where the active material loading of the positive electrode active material layer is 75 mg/cm², cracking was observed in the positive electrode active material layer. Thus, even when the aqueous binder with a glass transition temperature of 7°C or more is contained, and even when the single-walled carbon nanotubes are not contained, cracking does not occur in the positive electrode active material layer when the active material loading of the positive active material layer is small. Accordingly, it can be seen that cracking in the positive electrode active material layer caused by bending stress is a phenomenon caused by increasing the active material loading of the positive electrode active material layer. Therefore, the effect of suppressing cracking in the positive electrode active material layer by the cooperative function of the aqueous binder with a glass transition temperature of less than 7°C and the single-walled carbon nanotubes is unpredictable from the structure of the positive electrode active material layer with a small active material loading of the active material layer.

### <Preparation and bending test of bipolar electrode>

The granules of LiFePO₄ (LFP) having a carbon coating layer, styrene-butadiene rubber (SBR), single-walled carbon nanotubes (CNT), and sodium carboxymethyl cellulose (CMC) were mixed in the blending ratio shown in Table 3, water was then added to the mixture to prepare a positive electrode composition having a solid content of 75% by mass.

The graphite having a G/D ratio of 3.4, styrene-butadiene rubber (SBR), single-walled carbon nanotubes (CNT), and sodium carboxymethyl cellulose (CMC) were mixed in the blending ratio shown in Table 3, water was then added to the mixture to prepare a negative electrode composition having a solid content of 56% by mass.

An aluminum foil having a thickness of 30 µm, in which a copper foil having a thickness of 8 µm was bonded to one surface of the aluminum foil, was prepared as a current collector. The positive electrode composition was applied as a coating onto the one surface of the aluminum foil as a current collector by the doctor blade method. The applied positive electrode composition was dried and solidified by heat treatment at 50°C, so that the positive electrode active material layer having the active material loading of 75 mg/cm² was formed on the current collector. After that, the negative electrode composition was applied as a coating onto the one surface of the current collector to which the copper foil was bonded by the doctor blade method. The applied negative electrode composition was dried and solidified by heat treatment at 50°C, so that the negative electrode active material layer having the active material loading of 37.8 mg/cm² was formed on the current collector. In this way, a bipolar electrode having the positive electrode active material layer and the negative electrode active material layer was prepared.

**[Table 3]**

| NEGATIVE ELECTRODE ACTIVE MATERIAL LAYER | | | POSITIVE ELECTRODE ACTIVE MATERIAL LAYER | | |
|---|---|---|---|---|---|
| BLENDING RATIO (% BY MASS) | GRAPHITE | 96.55 | COMPOSITION (% BY MASS) | LFP | 98.25 |
| | SBR | 3.0 | | SBR | 1.3 |
| | CNT | 0.05 | | CNT | 0.05 |
| | CMC | 0.4 | | CMC | 0.4 |
| ACTIVE MATERIAL LOADING | (mg/cm²) | 37.8 | ACTIVE MATERIAL LOADING | (mg/cm²) | 75.0 |
| Tg OF SBR | (°C) | -13 | Tg OF SBR | (°C) | -13 |
| CNT | | SINGLE-WALLED | CNT | | SINGLE-WALLED |

A test sample having dimensions of 5 cm × 10 cm and a test sample having dimensions of 120 cm × 150 cm were prepared by cutting the bipolar electrode. Each of the test samples was wrapped around the half of the outer peripheral surface of a cylindrical body, which has a diameter of 50 mm, with the surface of the test sample on which the positive electrode active material layer was formed facing outward, and the surface condition of the positive electrode active material layer and the surface condition of the negative electrode active material layer were evaluated by visual inspection. As a result, in both of the positive electrode active material layer and the negative electrode active material layer in each of the test samples, no cracking was observed.

A technical concept that can be understood from each of the above-described embodiment and modifications will be described additionally.

### [Mode 1]

A positive electrode for a power storage device, comprising:
a current collector having a first surface; and
a positive electrode active material layer formed on the first surface of the current collector, the positive electrode active material layer containing a positive electrode active material that is capable of storing and releasing charge carriers, the positive electrode active material layer having an active material loading of more than 50 mg/cm² and containing the positive electrode active material in an amount of 97% by mass or more, wherein
the positive electrode active material layer contains:
   an aqueous binder with a glass transition temperature of less than 7°C; and
   a single-walled carbon nanotube.

### [Mode 2]

The positive electrode for the power storage device according to mode 1, wherein
the aqueous binder contains a compound having an aromatic ring.

### [Mode 3]

The positive electrode for the power storage device according to mode 2, wherein
the compound having the aromatic ring is styrene-butadiene rubber.

### [Mode 4]

The positive electrode for the power storage device according to any one of modes 1 to 3, wherein
the current collector has a second surface facing opposite to the first surface, and
the positive electrode is a bipolar electrode in which the positive electrode active material layer is formed on the first surface of the current collector and a negative electrode active material layer is formed on the second surface of the current collector.

### [Mode 5]

The positive electrode for the power storage device according to any one of modes 1 to 4, wherein
the positive electrode active material layer contains the aqueous binder in an amount of 0.8% by mass to 2.0% by mass, and
the positive electrode active material layer contains the single-walled carbon nanotube in an amount of 0.01% by mass to 0.1% by mass.

### [Mode 6]

The positive electrode for the power storage device according to any one of modes 1 to 5, wherein
the positive electrode active material has a carbon coating on a surface of the positive electrode active material.

### [Mode 7]

The positive electrode for the power storage device according to any one of modes 1 to 6, wherein
the positive electrode active material is a polyanionic compound having an olivine-type structure.

### [Mode 8]

A power storage device comprising:
a positive electrode having a positive electrode active material layer provided on a first surface of a positive current collector;
a negative electrode having a negative electrode active material layer provided on a first surface of a negative current collector, the negative electrode active material layer facing the positive electrode active material layer of the positive electrode;
a separator disposed between the positive electrode active material layer and the negative electrode active material layer; and
a spacer disposed between the first surface of the positive current collector and the first surface of the negative current collector, and bonded to the first surface of the positive current collector and the first surface of the negative current collector, wherein
the positive electrode is the positive electrode for the power storage device according to any one of modes 1 to 7.

### REFERENCE SIGNS LIST

21 positive electrode
21a positive current collector
21a1 first surface
21b positive electrode active material layer
100 bipolar electrode
101 bipolar current collector
101a first surface
101b second surface
102 positive electrode active material layer
103 negative electrode active material layer
104 positive current collector
105 negative current collector

## Claims

1. A positive electrode for a power storage device, comprising:
a current collector having a first surface; and
a positive electrode active material layer formed on the first surface of the current collector, the positive electrode active material layer containing a positive electrode active material that is capable of storing and releasing charge carriers, the positive electrode active material layer having an active material loading of more than 50 mg/cm² and containing the positive electrode active material in an amount of 97% by mass or more, wherein
the positive electrode active material layer contains:
an aqueous binder with a glass transition temperature of less than 7°C; and
a single-walled carbon nanotube.

2. The positive electrode for the power storage device according to claim 1, wherein
the aqueous binder contains a compound having an aromatic ring.

3. The positive electrode for the power storage device according to claim 2, wherein
the compound having the aromatic ring is styrene-butadiene rubber.

4. The positive electrode for the power storage device according to claim 1, wherein
the current collector has a second surface facing opposite to the first surface, and
the positive electrode is a bipolar electrode in which the positive electrode active material layer is formed on the first surface of the current collector and a negative electrode active material layer is formed on the second surface of the current collector.

5. The positive electrode for the power storage device according to claim 1, wherein
the positive electrode active material layer contains the aqueous binder in an amount of 0.8% by mass to 2.0% by mass, and
the positive electrode active material layer contains the single-walled carbon nanotube in an amount of 0.01% by mass to 0.1% by mass.

6. The positive electrode for the power storage device according to claim 1, wherein
the positive electrode active material has a carbon coating on a surface of the positive electrode active material.

7. The positive electrode for the power storage device according to claim 1, wherein
the positive electrode active material is a polyanionic compound having an olivine-type structure.

8. A power storage device comprising:
a positive electrode having a positive electrode active material layer provided on a first surface of a positive current collector;
a negative electrode having a negative electrode active material layer provided on a first surface of a negative current collector, the negative electrode active material layer facing the positive electrode active material layer of the positive electrode;
a separator disposed between the positive electrode active material layer and the negative electrode active material layer; and
a spacer disposed between the first surface of the positive current collector and the first surface of the negative current collector, and bonded to the first surface of the positive current collector and the first surface of the negative current collector, wherein
the positive electrode is the positive electrode for the power storage device according to any one of claims 1 to 7.
